# EUROPÄISCHE PATENTSCHRIFT

(11) **EP 0 540 468 B1**
(45) Veröffentlichungstag und Bekanntmachung des Hinweises auf die Patenterteilung: **04.12.1996**
(21) Anmeldenummer: 92810810.9
(22) Anmeldetag: 21.10.1992
(51) Int. Cl.: G11B 7/24, C09B 11/26

(54) **NIR-Farbstoffe, Verfahren zu ihrer Herstellung und ihre Verwendung**
NIR-dyes, method for their preparation and their use
Colorants absorbants dans l'infra-rouge proche, procédé pour leur préparation et leur utilisation

(30) Priorität: 30.10.1991 CH 3168/91
(43) Veröffentlichungstag der Anmeldung: 05.05.1993
(73) Patentinhaber: CIBA-GEIGY AG, 4002 Basel (CH)
(72) Erfinder: Naef, Rudolf, Dr., CH-4419 Lupsingen (CH); Schmidhalter, Beat, Dr., CH-6208 Oberkirch (CH); Preiswerk, Hanspeter, Dr., CH-4127 Birsfelden (CH)

(56) Entgegenhaltungen:
- EP-A- 0 266 310
- EP-A- 0 401 791
- GB-A- 2 163 863
- WPIL, FILE SUPPLIER, AN=88-290161[41], Derwent Publications Ltd., London, GB;
- WPIL, FILE SUPPLIER, AN=86-328264 [50], Derwent Publications Ltd., London, GB;
- CHEMICAL ABSTRACTS, vol. 90 Columbus, Ohio, US; abstract no. 73286r, Seite 64 ;Spalte 2 ;

## Beschreibung

Die vorliegende Erfindung betrifft neue NIR-Farbstoffe, Verfahren zu ihrer Herstellung, Zwischenprodukte sowie ihre Verwendung als NIR-absorbierende Substanzen in optischen Aufzeichnungsmedien.
Die erfindungsgemässen Verbindungen entsprechen der Formel I 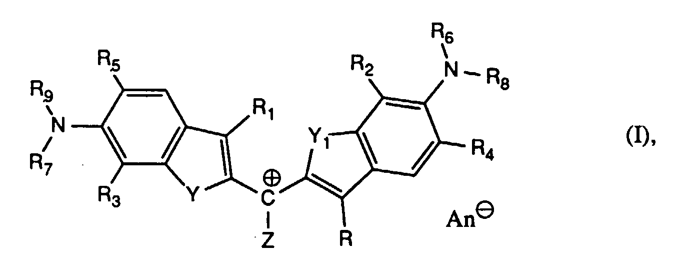 worin
Y und Y₁ unabhängig voneinander je O, S, NH oder N-Alkyl, N-Cycloalkyl, N-Phenyl oder N-Benzyl oder Y und Y₁ zusammen N-Alkylen-N,
R und R₁ unabhängig voneinander je H, Alkyl, Cycloalkyl, Aralkyl oder Aryl,
R₂ und R₃ unabhängig voneinander je H, oder R₂ zusammen mit R₆ und den sie verbindenden N- und C-Atomen einen 5- oder 6-gliedrigen Ring und R₃ H, oder R₃ zusammen mit R₇ und den sie verbindenden N- und C-Atomen einen 5- oder 6-gliedrigen Ring und R₂H,
R₄ und R₅ unabhängig voneinander je H, oder R₄ zusammen mit R₈ und den sie verbindenden N- und C-Atomen einen 5- oder 6-gliedrigen Ring und R₅ H, oder R₅ zusammen mit R₉ und den sie verbindenden N- und C-Atomen einen 5- oder 6-gliedrigen Ring und R₄ H bedeuten,
R₆, R₇, R₈ und R₉ unabhängig voneinander je H, Alkyl, Cycloalkyl, Aralkyl oder Aryl darstellen, oder R₆ und R₈ und/oder R₇ und R₉ zusammen mit dem sie verbindenden N-Atom einen Piperidinrest, Morpholinrest oder einen unsubstituierten oder am N-Atom mit C₁-C₄-Alkyl, Hydroxy-C₁-C₄-Alkyl oder Amino-C₁-C₄-Alkyl substituierten Piperazinrest bilden,
Z H oder Aryl und
An^{⊖} ein Anion einer einbasischen Säure bedeuten, wobei
das Alkyl oder Cycloalkyl unsubstituiert oder mit Halogen, Hydroxy, C₁-C₄-Alkoxy, Cyan oder Phenyl substituiert ist, und
das Aryl oder Aralkyl unsubstituiert oder mit Halogen, Hydroxy, NH-Alkyl, N(Alkyl)₂, C₁-C₆-Alkyl, C₁-C₄-Alkoxy, Carboxy, Alkoxycarbonyl, Carbonamido, Mono- oder Dialkylcarbonamido, Nitro oder CN substituiert ist.

Unter Alkylresten sind erfindungsgemäss generell geradkettige oder verzweigte Alkylgruppen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, sowie die anderen dazugehörenden Isomeren. Die Alkylreste enthalten vorzugsweise 1 bis 6 C-Atome, vor allem 1 bis 4 C-Atome. Diese Alkylreste können substituiert sein, z.B. durch Halogen, Hydroxy, Alkoxy, Cyan oder Phenyl. Geeignete Alkoxyreste sind solche mit 1-4 C-Atomen z.B. Methoxy, Ethoxy, Propoxy, iso-Propoxy, n-Butoxy, iso-Butoxy oder tert.-Butoxy. Unter Halogen ist in dieser Anmeldung generell Fluor, Brom, Jod oder vor allem Chlor zu verstehen. Beispiele für solche substituierten Alkylreste sind Hydroxyethyl, Methoxymethyl, Ethoxyethyl, Cyanethyl, Propoxypropyl, Benzyl, Chlorethyl oder Cyanethoxyethyl.

Unter Cycloalkyl wird im Rahmen dieser Anmeldung zum Beispiel Cyclopentyl und Cyclohexyl verstanden. Das Cycloalkyl kann unsubstituiert oder mit wie zuvor für Alkyl definierten Substituenten substituiert sein.

Die Arylreste Z können aromatische carbocyclische oder heterocyclische, insbesondere mono- oder bicyclische Reste darstellen. Es handelt sich z.B. um Phenyl, Naphthyl-1, Naphthyl-2, Pyridyl-2, Pyridyl-3, Pyridyl-4, Furyl, Pyrrolyl, Imidazolyl, Pyrimidyl-2, Thienyl-2, Oxazolyl, Cumaryl, Indolyl, Chinolinyl, Isochinolinyl, Benzofuryl, Benzothienyl, Benzoxazolyl oder Benzimidazolyl.

R₁, R₂, R₆, R₇, R₈ und R₉ stellen als Aryl bevorzugt Phenyl dar.

Aralkyl bedeutet im Rahmen der Erfindung bevorzugt Benzyl.

Die Arylreste und das Aralkyl können substituiert sein, z.B. mit Halogen, Hydroxy, NH-Alkyl, N(Alkyl)₂, C₁-C₆-Alkyl, C₁-C₄-Alkoxy, Carboxy, Alkoxycarbonyl, Carbonamido, Mono- oder Dialkylcarbonamido, Nitro oder CN.

Falls Y und Y₁ zusammen eine Gruppe der Formel N-Alkylen-N bedeuten, so bedeutet Alkylen vorzugsweise eine Gruppe der Formel -[C(R₁₀)₂]ₘ-, worin R₁₀ H oder Alkyl und m 1, 2 oder 3 bedeutet. R₁₀ steht bevorzugt für H.

R₆ und R₈ und/oder R₇ und R₉ können auch zusammen mit dem sie verbindenden N-Atom einen Piperidin-, Morpholin- oder Piperazinrest bilden. Der Piperazinrest kann am nicht mit dem Triazinring verbundenen N-Atom durch C₁-C₄-Alkyl oder Hydroxy-C₁-C₄-Alkyl oder Amino-C₁-C₄-Alkyl substituiert sein. Bevorzugte Substituenten sind lineares C₁-C₄-Alkyl, insbesondere Methyl und Ethyl.

R₂ und R₆, können ebenso wie R₄ und R₈, R₃ und R₇ sowie R₅ und R₉ zusammen mit dem Stickstoffatom und den beiden sie verbindenden Kohlenstoffatomen einen 5- oder 6-gliedrigen Ring bilden, welcher ein weiteres Heteroatom, z.B. Sauerstoff oder Schwefel, enthalten kann. Ausserdem kann der Ring substituiert sein, z.B. durch Hydroxy, Alkoxy, Alkyl, Halogen, CN oder Phenyl, oder einen weiteren ankondensierten Benzolring tragen. Bevorzugte solche Ringe sind Dihydrooxazin- und Di- oder Tetrahydropyridinringe, welche unsubstituiert oder mit 1 bis 4 Methylgruppen substituiert sind.

In besonders wertvollen Farbstoffen der Formel (I) stellen R und R₁ unabhängig voneinander

je H oder einen unsubstituierten C₁-C₄-Alkylrest, insbesondere Methyl, dar. R₂ und R₃ bedeuten vorzugsweise unabhängig voneinander je H oder sie bedeuten zusammen

mit R₆ bzw. R₇ Trimethylen. R₄ und R₅ bedeuten vorzugsweise unabhängig voneinander je H oder sie bedeuten zusammen

mit R₈ bzw. R₉ Trimethylen oder 1,1-Dimethyl-3-methyl-trimethylen. R₆, R₇, R₈ und R₉ bedeuten vorzugsweise unabhängig voneinander je H, C₁-C₄-Alkyl oder

gegebenenfalls wie zuvor definiert substituiertes Phenyl. Y und Y₁ bedeuten vorzugsweise unabhängig voneinander je O, NH oder NH-C₁-C₄-Alkyl.

Z bedeutet vorzugsweise H oder einen gegebenenfalls substituierten Phenyl-, Naphthyl-, Pyridyl-, Furyl-, Thienyl- oder Pyrrolylrest. In besonders bevorzugten Farbstoffen der Formel (I) bedeutet Z H, unsubstituiertes Pyridyl oder Furyl oder unsubstituiertes oder mit Nitro, Mono- oder Dialkylamino, Hydroxy, Carboxy oder Carboalkoxy substituiertes Phenyl.

Erfindungsgemäss kann sich das Anion An^{⊖} von einer anorganischen oder organischen Säure ableiten. Beispiele für anorganische Anionen sind F^{⊖}, Cl^{⊖} , Br^{⊖}, I^{⊖}, ClO₄^{⊖} , BrO₄^{⊖}, IO₄^{⊖}, NO₃^{⊖} , HSO₄^{⊖}, HCO₃^{⊖}, C₁-C₁₂-AlkylOSO₃^{⊖}, C₆H₅OSO₃^{⊖}, BF₄^{⊖}, PF₆^{⊖} , AsF₆^{⊖}, SbF₆^{⊖}, BiF^{⊖}, SbCl₆^{⊖}, (C₁-C₄-AlkylO)₂PO₂^{⊖}, (C₁-C₄-AlkylO)₂PO^{⊖}, (C₁-C₄-AlkylO)₂R₁₁PO^{⊖}, FSO₃^{⊖}, (C₁-C₄-AlkylO)R₁₁PO^{⊖}, R₁₁SO₃^{⊖}, R₁₁CO₂^{⊖}, wobei R₁₁ H, C₁-C₁₂-Alkyl, das teilweise oder ganz mit F oder Cl substituiert sein kann, C₄-C₈-Cycloalkyl, Phenyl, Naphthyl oder mit 1 bis 3 F, Cl, C₁-C₆-Alkyl oder C₁-C₆-Alkoxy substituiertes Phenyl oder Naphthyl darstellt. Besonders bevorzugte Anionen An^{⊖} sind Cl^{⊖}, Br^{⊖}, ClO₄^{⊖}, C₁-C₆-AlkylOSO₃^{⊖}, FSO₃^{⊖} und R₁₁SO₃^{⊖}, worin R₁₁ für C₁-C₄-Alkyl, CF₃, Phenyl oder mit 1 bis 3 F, Cl oder C₁-C₄-Alkyl substituiertes Phenyl steht.

Die erfindungsgemässen Farbstoffe der Formel (I), worin Z Wasserstoff bedeutet, werden z.B. hergestellt, indem man eine Verbindung der Formel II 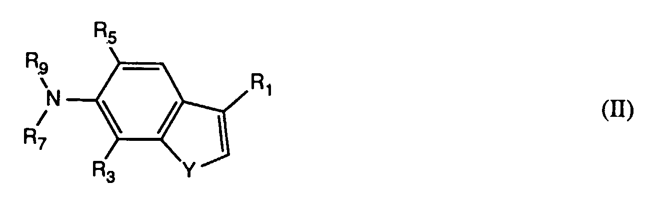 mit einem Orthoameisensäureester in Gegenwart einer starken Säure umsetzt. Y, R₁, R₃, R₅, R₇ und R₉ weisen dabei die unter der Formel (I) angegebenen Bedeutungen auf.

Als Orthoameisensäureester werden vorzugsweise solche der Formel HC(O-C₁-C₆-Alkyl)₃ verwendet, zum Beispiel Orthoameisensäuremethyl- oder ethylester.

Als starke Säure verwendet man z.B. 100%ige Schwefelsäure oder Toluolsulfonsäure-Monohydrat. Zweckmässigerweise setzt man den Orthoameisensäureester im Ueberschuss ein, so dass dieser gleichzeitig als Lösungsmittel dient. Vorzugsweise arbeitet man bei erhöhter Temperatur, z.B. bei 50 bis 120°C.

Eine weitere Möglichkeit zur Herstellung der Farbstoffe der Formel (I) besteht darin, dass man eine Verbindung der Formel III 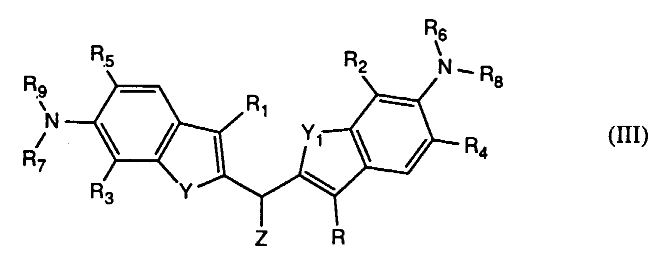 mit einem Oxidationsmittel oxidiert, wobei Y, Y₁,Z, R und R₁ bis R₉ die unter der Formel (I) angegebenen Bedeutungen aufweisen.

Geeignete Oxidationsmittel sind beispielsweise Jod, Chloranil (Tetrachlorbenzochinon), H₂O₂ oder vor allem Eisen(III)chlorid.

Die Verbindungen der Formel (III) sind neu und stellen einen weiteren Gegenstand der vorliegenden Erfindung dar.

Man erhält sie z.B., indem man eine Verbindung der Formel (II) mit einem Aldehyd der Formel (IV) 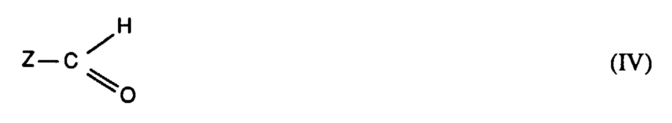 umsetzt, wobei Z die unter der Formel (I) angegebene Bedeutung aufweist.

Die Umsetzung erfolgt vorzugsweise in einem organischen Lösungsmittel, z.B. einem aliphatischen Alkohol, und bei leicht erhöhter Temperatur, z.B. zwischen 25 und 80°C, und die Komponenten werden vorzugsweise in etwa stöchiometrischen Mengen eingesetzt.

Die Verbindungen der Formeln (II) und (IV) sind bekannt oder können auf an sich bekannte Art hergestellt werden.

Die erfindungsgemässen Verbindungen der Formel (I) weisen überraschend eine breite und starke Absorptionsbande vom sichtbaren bis in den nahen infraroten Bereich (NIR-Bereich) im Wellenlängenbereich von etwa 400 nm bis etwa 1000 nm auf. Sie eignen sich daher besonders zur Verwendung als lichtabsorbierende Substanzen in optischen Aufzeichnungsmedien. Ein weiterer Gegenstand der Erfindung ist ein optisches Aufzeichnungsmaterial aus (a)

einem festen Trägermaterial, auf dem (b) eine Aufzeichnungsschicht aus mindestens einer Verbindung der Formel I aufgebracht ist. Der Aufbau des Aufzeichnungsmaterials ist an sich bekannt.

Geeignete Träger sind zum Beispiel Metalle, Metallegierungen, Gläser, Mineralien, Keramiken,

Metall- und Halbmetalloxide, -carbide und -nitride und duroplastische oder thermoplastische Kunststoffe. Der Träger kann eine Dicke von 0,01 mm bis 1 cm, bevorzugt 0,1 mm bis 0,5 cm aufweisen. Bevorzugte Träger sind Gläser und homo- oder kopolymere Kunststoffe. Geeignete Kunststoffe sind zum Beispiel thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze. Je nach Aufzeichnungs- und Auslesemethode kann das Trägermaterial opak (Bestrahlung von der Seite der Aufzeichnungsschicht) oder transparent (Bestrahlung von der Seite des Trägermaterials) sein. Das Trägermaterial wird so gewählt, dass es bei den Beschichtungsverfahren nicht zerstört wird. Lösungsmittel-empfindliche Trägermaterialien können vor der Beschichtung mit einer Lösungsmittel-beständigen Grundschicht versehen werden, die zum Beispiel eine Dicke von 0,05 bis 30 µm und bevorzugt 0,1 bis 10 µm aufweisen kann. Geeignete Materialien für eine Grundschicht sind zum Beispiel Ionomerharze, Silikate, SiO₂, MgF₂, TiO₂, TiN, Si₃N₄, Harze vom Vinylmonomeren und Silikonharze. Die Dicke der Aufzeichnungsschicht wird so gewählt, dass im Wellenlängenbereich des

verwendeten Lasers ein Reflexionsvermögen von mindestens 15 % gegeben ist. Die Dicke kann zum Beispiel von 10 nm bis 10 µm, bevorzugt 20 nm bis 2 µm betragen. Auf dem Träger können ein oder mehrere, zum Beispiel 1 bis 10, bevorzugt 1 bis 5 und

besonders bevorzugt 1 bis 3 Schichten aus Verbindungen der Formel I aufgebracht sein. Die Anzahl der Schichten und weiterer Schichten richtet sich hauptsächlich nach der optischen Dichte des Schichtaufbaus, die bei der zur Aufzeichnung verwendeten Wellenlänge noch eine ausreichende Transmission gewährleisten muss.

Auf der Schicht aus Verbindungen der Formel I oder auf dem Träger kann eine Reflexionsschicht aufgebracht sein, die eine Dicke von zum Beispiel 100 bis 5000 Å, bevorzugt 100 bis 3000 Å und besonders von 300 bis 1500 Å aufweisen kann. Als reflektierendes Material eignen sich besonders Metalle, die die zur Aufzeichnung und Wiedergabe verwendete Laserstrahlung gut reflektieren, zum Beispiel die Metalle der dritten, vierten und fünften Hauptgruppe und den Nebengruppen des periodischen Systems der chemischen Elemente. Besonders geeignet sind Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt und die Lanthanidenmetalle Ce, Pr, Nd, Pm, Sm, Eu, Gd, Tb, Dy, HO, Er, Tm, Yb und Lu. Besonders bevorzugt ist aus Gründen der hohen Reflektivität und leichten Herstellbarkeit eine Reflexionsschicht aus Aluminium oder Gold. Wenn die erfindungsgemässen Aufzeichnungsmedien eine lichtreflektierende Schicht enthalten, so dass das eingestrahlte und durch die farbige Schicht wandernde Licht (soweit es nicht absorbiert wird) an der Reflexions-schicht reflektiert wird und nochmals durch die gefärbte Schicht wandert, ist es vorteilhaft, in diesen Fällen der Farbstoffschicht die Dicke λ/4 (λ = Wellenlänge des eingestrahlten Lichts) zu geben, da dann durch Interferenz eine besonders hohe Nutzung (Schwächung) des eingestrahlten Lichts erreicht wird. Bei Verwendung der erfindungsgemässen Farbstoffe werden jedoch auch mit Schichtdicken, die deutlich unter λ/4 liegen, sehr empfindliche Aufzeichnungsmaterial erhalten, was überraschend ist.

In einer weiteren Ausführungsform kann die Aufzeichnungsschicht zusätzlich ein thermoplastisches Bindemittel, z.B. Polystyrol, Polyvinylacetat, Polyvinylpyrrolidon, Cellulose-acetatbutyrat, Polysulfonamid, Polycarbonat oder Cellulosenitrat enthalten.

Die je nach Schichtaufbau oberste Schicht, zum Beispiel die Reflexionsschicht, die Aufzeichnungsschicht oder eine weitere Hilfsschicht wird zweckmässig mit einer Schutzschicht versehen, die eine Dicke von 0,1 bis 100 µm, bevorzugt 0,1 bis 50 µm und besonders bevorzugt 0,5 bis 15 µm aufweisen kann. Als Schutzmaterial eignen sich hauptsächlich Kunststoffe, die in dünner Schicht entweder direkt oder mit Hilfe von Haftschichten auf den Träger oder die oberste Schicht aufgetragen sind. Man wählt zweckmässig mechanisch und thermisch stabile Kunststoffe mit guten Oberflächeneigenschaften, die noch modifiziert, zum Beispiel beschrieben werden können. Es kann kann sich sowohl um duroplastische wie auch thermoplastische Kunststoffe handeln. Bevorzugt sind strahlungsgehärtete (zum Beispiel mit UV-Strahlung) Schutzschichten, die besonders einfach und wirtschaftlich herstellbar sind. Strahlungshärtbare Materialien sind in grosser Vielzahl bekannt. Beispiele für strahlungshärtbare Monomere und Oligomere sind Acrylate und Methacrylate von Diolen, Triolen und Tetrolen, Polyimide aus aromatischen Tetracarbonsäuren und aromatischen Diaminen mit C₁-C₄-Alkylgruppen in mindestens zwei Orthostellungen der Aminogruppen, und Oligomere mit Dialkyl-, zum Beispiel Dimethylmaleinimidylgruppen. Spezifische Beispiele sind UV-vernetzbare Polymere auf der Basis von Polyacrylaten wie zum Beispiel RENGOLUX® RZ 3200/003 oder 3203/001 der Firma Morton International-Dr. Renger.

Die erfindungsgemässen Aufzeichnungsmaterialien können nach an sich bekannten Verfaren hergestellt werden, wobei je nach verwendeten Materialien und deren Funktionsweise unterschiedliche Beschichtungsmethoden angewendet werden können.

Geeignete Beschichtungsverfahren sind zum Beispiel Tauchen, Giessen, Streichen, Rakeln, Schleudergiessen und Aufdampfverfahren, die im Hochvakuum durchgeführt werden. Bei der Anwendung von zum Beispiel Giessverfahren werden im allgemeinen Lösungen in organischen Lösungsmitteln verwendet. Bei der Verwendung von Lösungsmitteln ist darauf zu achten, dass die verwendeten Träger gegen diese Lösungsmittel unempfindlich sind. Bevorzugt werden alle Schichten mittels Aufdampfverfahren besonders im Vakuum hergestellt. Geeignete Beschichtungsverfahren sind zum Beispiel in der EP-A-0 401791 beschrieben.

Das Aufbringen der Aufzeichnungsschicht(en) und der metallischen Reflexionsschichten erfolgt bevorzugt durch Aufdampfen im Vakuum. Das aufzubringende Material wird zunächst in ein geeignetes Gefäss gefüllt, das gegebenenfalls mit einer Widerstandsheizung versehen ist, und dann in eine Vakuumkammer gesetzt. Der zu bedampfende Träger wird oberhalb des Gefässes mit dem aufzudampfenden Material in einen Halter eingesetzt. Dieser ist so konstruiert, dass der Träger gegebenenfalls rotiert (z.B. mit 50 Upm) und geheizt werden kann. Die Vakuumkammer wird auf etwa 1,3 · 10⁻⁵ bis 1,3 · 10⁻⁶ mbar (10⁻⁵ bis 10⁻⁶ Torr) evakuiert, und die Heizung wird so eingestellt, dass die Temperatur des aufzudampfenden Materials bis zu dessen Verdampfungstemperatur ansteigt. Die Verdampfung wird so lange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden. Diese Aufdampfmethode ist besonders zum gleichzeitigen Aufbringen von Dithiochinacridonen und Hydrazonen zur Bildung homogener Mischschichten geeignet.

Die Sputtertechnik wird besonders wegen der hohen Haftfähigkeit zum Träger für das Aufbringen der metallischen Reflexionsschicht bevorzugt. Das aufzubringende Material (z.B. Aluminium) in Form einer Platte wird als eine "Target"-Elektrode benutzt, während der Träger auf der Gegenelektrode befestigt wird. Zuerst wird die Vakuumkammer auf etwa 10⁻⁶ Torr evakuiert und dann inertes Gas, wie z.B. Argon, bis zu etwa 10⁻³ Torr eingeführt. Zwischen der "Target"-Elektrode und der Gegenelektrode wird eine hohe Gleich- oder Radiofrequenz-Spannung von mehreren kV, gegebenenfalls unter Verwendung von Permanentmagneten ("Magnetron-Sputtering"), angelegt, um Ar⁺-Plasma zu erzeugen. Die durch die Ar+-Ionen von der "Target"-Elektrode gesputterten (herausgeschlagenen) Metallteilchen werden auf dem Substrat gleichmässig und fest deponiert. Die Beschichtung erfolgt innerhalb von einigen 10 Sekunden bis mehreren Minuten je nach Targetmaterialien, Sputtermethode und Sputterbedingungen. Diese Sputtertechnik ist in Fachbüchern ausführlich beschrieben (z.B. W. Kern und L. Vossen, "Thin Film Processes", Academic Press, 1978).

Die Dicke der beim Aufdampfen gebildeten Schichten kann mit Hilfe bekannter Verfahren überwacht werden, z.B. mit Hilfe eines optischen Systems, welches während der Aufdampfung das Reflexionsvermögen der mit dem Absorptionsmaterial bedeckten Reflexionsobefläche misst. Vorzugsweise wird das Wachsen der Schichtdicke mit einem Schwingquarz verfolgt.

Schutzschichten werden bevorzugt mittels Belackungsanlagen ("spin coater") aufgetragen und bei Verwendung von lichtempfindlichen Materialien mit UV-Licht vernetzt.

Der Aufbau des erfindungsggemässen Aufzeichnungsmaterials richtet sich hauptsächlich nach der Auslesemethode; bekannte Funktionsprinzipien sind die Messung der Veränderung der Transmission oder der Reflexion. Wenn das Aufzeichnungsmaterial gemäss der Veränderung der Lichttransmission aufgebaut wird, kommt zum Beispiel folgende Struktur in Frage: Transparenter Träger/Aufzeichnungsschicht (gegebenenfalls mehrschichtig) und falls zweckmässig, transparente Schutzschicht. Das Licht zur Aufzeichnung sowie zum Auslesen kann entweder von der Trägerseite oder der Aufzeichnungsschicht- bzw. gegebenenfalls der Schutzschichtseite eingestrahlt werden, wobei sich der Lichtdetektor immer auf der Gegenseite befindet.

Wenn das Aufzeichnungsmaterial gemäss der Veränderung der Reflexion aufgebaut wird, so können zum Beispiel folgende andere Strukturen zur Anwendung kommen: Transparenter Träger/Aufzeichnungsschicht (gegebenenfalls mehrschichig)/Reflexionsschicht und falls zweckmässig, Schutzschicht (nicht unbedingt transparent), oder Träger (nicht unbedingt transparent)/Reflexionsschicht/Aufzeichnungsschicht und falls zweckmässig transparente Schutzschicht. Im ersten Fall wird das Licht von der Trägerseite eingestrahlt, während im letzen Fall die Strahlung von der Aufzeichnungsschicht- bzw. gegebenenfalls von der Schutzschichtseite einfällt. In beiden Fällen befindet sich der Lichtdetektor auf gleicher Seite wie die Lichtquelle. Der ersterwähnte Aufbau des erfindungsgemäss zu verwendenden Aufzeichnungsmaterials ist im allgemeinen bevorzugt.

Das erfindungsgemässe Aufzeichnungsmaterial eignet sich hervorragend zur Aufzeichnung von Informationen durch Bestrahlung mit Lasern vom sichtbaren Bereich bis (zum NIR-Bereich. Nach der Bestrahlung wird eine stark erhöhte Reflexion bzw. Transmission des Laserlichts beobachtet. Die Veränderung der Reflexion bzw. Tansmission kann daher zum Auslesen der Information verwendet werden, wobei keine Zerstörung der eingeschriebenen Information durch die zum Auslesen verwendete Laserstrahlung stattfindet. Die Informationen können daher mehrfach ausgelesen werden.

Ein besonderer Vorteil der Verwendung der Verbindungen der Formel I als optische Aufzeichnungsschicht für Informationen besteht in der breiten und starken Absorptionsbande vom sichtbaren bis in den Infrarotbereich (Wellenlängenbereich von 400 bis 1000 nm). Hierdurch können sowohl Laser zur Bestrahlung und Informationsaufzeichnung verwendet werden, die im Wellenlängenbereich von 600 bis 1060 nm emittieren [zum Beispiel Diodenlaser wie InGaAlP (680 nm), GaAlAs (780-880 nm) und GaAs (890-1060 nm)], als auch frequenzverdoppelte Halbleiterlaser, die zum Beispiel bei 432 nm oder 532 nm emittieren. Die Aufzeichnungsschichten zeichnen sich ferner durch eine hohe Empfindlichkeit aus. Die Aufzeichnungsschichten weisen ferner einen überraschend hohen komplexen Brechungsindex N = n+ik auf, das heisst sowohl einen hohen Brechungsindex n wie auch einen hohen Absorptionskoeffizienten k. Hierdurch ist ein sehr hoher Kontrastunterschied zwischen beschriebenen und unbeschriebenen Stellen der Schicht gegeben.

Ein weiterer Gegenstand ist ein Verfahren zum optischen Aufzeichnen und Speichern von Informationen in Form von Bits, das dadurch gekennzeichnet ist, dass man die Aufzeichnungsschicht eines erfindungsgemässen Aufzeichnungmaterials mit Laserlicht einer Wellenlänge von 400 bis 1100 nm bestrahlt und die aufgezeichnete Information bei gleicher Wellenlänge durch Messung des Absorptionsunterschiedes zur unbestrahlten Umgebung ausliest.

Geeignete Laser sind zum Beispiel handelsübliche Diodenlaser, insbesondere Halbleiter-Diodenlaser, zum Beispiel GaAsAl-, InGaAlP- oder GaAs-Laser einer Wellenlänge von 780, 650 beziehungsweise 830 nm, oder He/Ne-Laser (633 nm) und Argon-Laser (514 nm). Die Aufzeichnung kann mit Hilfe eines Lichtmodulators Punkt für Punkt vorgenommen werden.

Die zur Aufzeichnung verwendete Energie der Laserstrahlung kann zum Beispiel von 0,1 bis 10 nJ/Markierung (Bit), bevorzugt von 0,2 bis 5 nJ/Markierung (Bit) und besonders bevorzugt 0,8 bis 3 nJ/Markierung (Bit) betragen. Die Energiemenge wird im wesentlichen durch die Bestrahlungszeit gesteuert, zum Beispiel durch Pulse im Bereich von einigen 10 bis 100 Nanosekunden.

Das erfindungsgemässe Verfahren ermöglicht eine Speicherung von Informationen mit hoher Zuverlässigkeit und Beständigkeit, welche sich durch eine sehr gute mechanische und thermische Stabilität sowie durch eine hohe Lichtstabilität und scharfe Randzonen auszeichnen. Besonders vorteilhaft ist das überraschend hohe Signal/Rauschverhältnis von Trägermaterial zur Informationsmarkierung, das ein einwandfreies Auslesen zulässt. Ferner ist das optische Aufzeichnungssystem einfach und kostengünstig.

Das Auslesen der Information erfolgt durch Messung der Absorption nach dem Reflexionsverfahren oder Transmissionsverfahren unter Verwendung von Laserstrahlung, wobei es besonders vorteilhaft ist, dass Laserstrahlung der zur Aufzeichnung benutzten Wellenlänge verwendet werden kann, also auch kein zweiter Laser eingesetzt werden muss. In einer bevorzugten Ausführungsform erfolgt das Aufzeichnen und Auslesen der Information bei gleicher Wellenlänge. Beim Auslesen verwendet man im allgemeinen energiearme Laser, deren Strahlungsintensität gegenüber der zur Aufzeichnung verwendeten Laserstrahlung zum Beispiel um das zehn- bis fünfzigfache reduziert ist. Die Informationen können beim erfindungsgemäss verwendeten Aufzeichnungsmaterial ein- oder mehrfach ausgelesen werden. Die Veränderung im Absorptionsspektrum bzw. die gespeicherte Information kann mit einem Photodetektor unter Verwendung eines energiearmen Lasers abgelesen werden. Geeignete Photodetektoren umfassen PIN-Photodioden sowie Mikroskop-Spektrophotometer, wie z.B. UMSP 80 von Carl Zeiss, welche es ermöglichen, die spektralen Veränderungen durch Transmission oder Absorption und insbesondere Reflexion zu messen.

Ein weiterer Gegenstand der Erfindung ist die Verwendung der Verbindungen der Formel I als optisches Aufzeichnungsmaterial.

Die nachfolgenden Beispiele dienen der Erläuterung der Erfindung.

### A) Herstellungsbeispiele

### Beispiel 1:

a) Zu einem Gemisch von 31,2 g N,N-Diethyl-m-phenylen- diamin, 28,9 g Kaliumcarbonat und 5,25 g Kaliumiodid in 145 ml Dimethylformamid werden bei 0-5° C innert 2 Stunden 21,1 g Chloraceton zugetropft und anschliessend während 15 Stunden bei gleicher Temperatur verrührt. Nach Zugabe von 500 ml Wasser fallen 37 g N,N-Diethyl-N′-acetonyl-m-phenylendiamin in Form eines farblosen Produktes an, welches nach Waschen mit Wasser und Trocknen bei 45° C am Vakuum einen Schmelzpunkt von 60° C zeigt.
b) Ein inniges Gemisch von 46,5 g N,N-Diethyl-N′-acetonyl-m-phenylendiamin und 46,5 g Zinkchlorid wird langsam erhitzt, wobei es ab 70° C zu schmelzen beginnt und ab 115° C die exotherme Reaktion durch Aussenkühlung kontrolliert werden muss. Nach 30 minütigem Halten der Temperatur von 130° C werden innert 20 Minuten 250 ml 1N Salzsäure zugetropft, wobei die Temperatur bei ca. 90° C stabilisiert wird. Die braune Emulsion wird weitere 1,5 Stunden bei dieser Temperatur gerührt und anschliessend mit 100 ml konz. Natronlauge alkalisch gestellt. Die anfallende Suspension wird mit Essigester versetzt und filtriert. Die organische Phase wird abgetrennt, mit Aktivkohle versetzt und 1 Stunde bei Raumtemperatur gerührt. Nach Filtration und Eindampfen erhält man 23 g 6-Diethylamino-3-methylindol in Form eines braunen Öls.
c) Eine Lösung von 50 ml Triethylorthoformiat, 0,95 g Toluolsulfonsäure-Monohydrat und 2,02 g 6-Diethylamino-3-methylindol werden 1 Stunde bei 100° C gerührt. Nach dem Einengen der grünen Suspension wird durch Zugabe von Hexan der Farbstoff der Formel 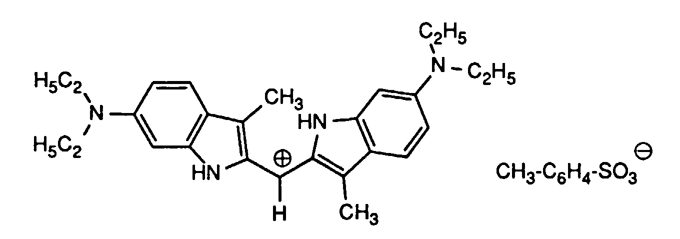 in Form einen grünen Pulvers ausgefällt, welches nach Trocknung oberhalb 330° C schmilzt.

### Beispiel 2:

In einer Lösung von 25 ml Triethylorthoformiat und 0,5 ml 100%iger Schwefelsäure werden 1,74 g 6-Dimethylamino-3-methylindol langsam auf 70° C erhitzt und 1,5 Stunden bei dieser Temperatur gehalten, wobei grünglänzende Kristalle ausfallen. Nach Zufügen von 50 ml Aceton wird der Niederschlag filtriert, mit Aceton gewaschen und am Vakuum getrocknet. Das als Ethylsulfat angefallene Farbsalz schmilzt oberhalb 330° C. Der Farbstoff entspricht der Formel

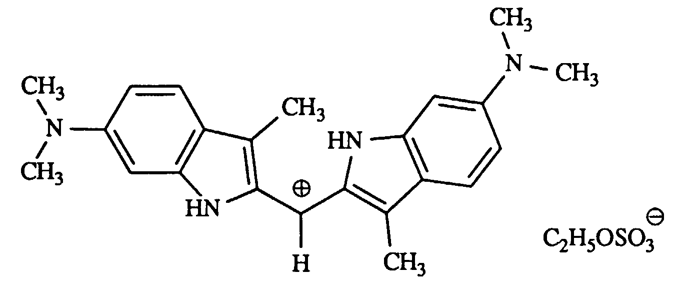

### Beispiel 3:

a) In einer Mischung von 50 ml Ethanol und 25 ml Eisessig werden 1,74 g 6-Dimethylamino-3-methylindol und 640 mg Benzaldehyd unter Stickstoffspülung während 6,5 Stunden bei 45° C verrührt. Nach Kühlung wird mit 150 ml Wasser versetzt und anschliessend werden bei 5° C 150 ml gesättigte wässrige Natriumacetat-Lösung zugetropft. Die Suspension wird mit Essigester extrahiert, wobei nach Eindampfen der organischen Lösung 1,82 g hellbraunes Pulver zurückbleiben, welches nach Umkristallisation aus Toluol/n-Hexan ab 69° C schmilzt und folgender Formel entspricht: 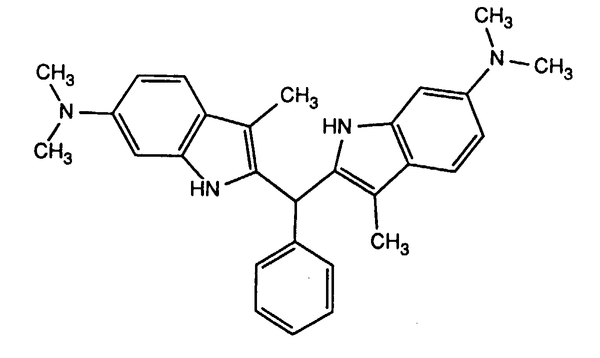
b) Eine Lösung von 40 ml Ethanol, 20 ml Eisessig und 1,8 g des wie vorstehend beschrieben erhaltenen Bis(6-dimethylamino-3-methylindol-2-yl)-phenylmethans wird mit 2,75 g Eisentrichlorid-Hexahydrat versetzt und 1,5 Stunden bei Raumtemperatur gerührt. Anschliessend werden innert 30 Minuten bei Raumtemperatur 150 ml einer 10%igen wässrigen Lösung von Natriumperchlorat zugetropft, wobei der Farbstoff ausfällt, der mit wenig Wasser gewaschen und am Vakuum getrocknet wird. Die erhaltenen grünen Kristalle schmelzen oberhalb 320° C.
Der Farbstoff entspricht der Formel

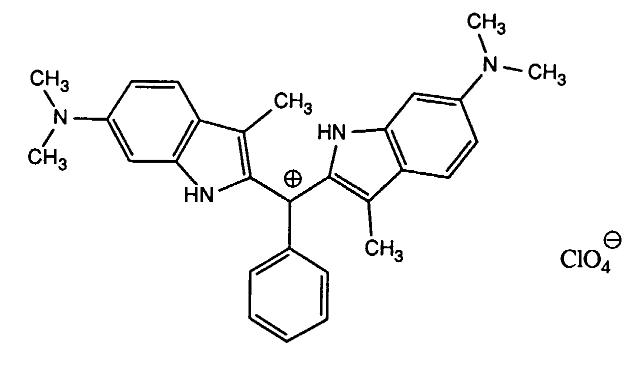

### Beispiel 4:

a) In analoger Weise wie im Beispiel 3a) werden 1,74 g 6-Dimethylamino-3-methylindol mit 0,76 g 4-Nitrobenzaldehyd zur Reaktion gebracht, wobei 2,1 g braune Kristalle isoliert werden, die ab 225° C unter Zersetzung schmelzen und folgender Formel entsprechen: 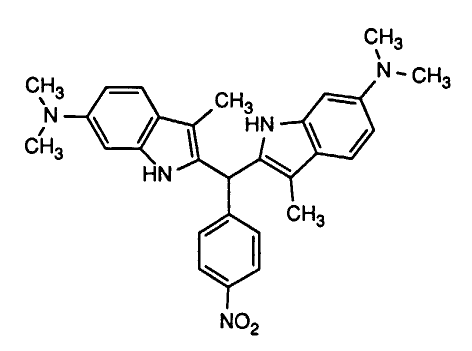
b) In 75 ml 0.1N Salzsäure werden 1,06 g des wie vorstehend beschrieben erhaltenen Bis(6-dimethylamino-3-methylindol-2-yl)-4-nitrophenylmethans bei Raumtemperatur gelöst und mit 1,8 g Eisentrichlorid-hexahydrat oxidiert. Die tiefblaue Lösung wird mit 75 ml Wasser versetzt und weitere 2 Stunden bei Raumtemperatur gerührt. Danach gibt man 10 ml einer 10%igen wässrigen Natriumperchlorat-Lösung zu und filtriert den ausfallenden kristallinen Niederschlag ab. Nach dem Waschen mit wenig Wasser und Trocknen am Vakuum bleiben 1 g dunkelgrüne Kristalle zurück, welche oberhalb von 320° C schmelzen. Der Farbstoff entspricht der Formel:

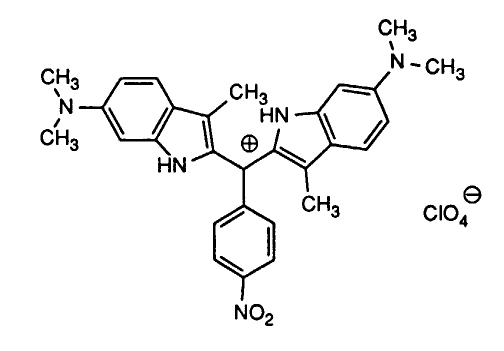

### Beispiel 5:

a) In analoger Weise wie im Beispiel 3 werden 1,74 g 6-Dimethylamino-3-methylindol mit 0,75 g 4-Dimethylaminobenzaldehyd zur Reaktion gebracht, wobei 1,79 g, nach Umkristallisation aus Isopropanol weisse Kristalle anfallen, welche ab 240° C unter Zersetzung schmelzen. Sie entsprechen der Formel: 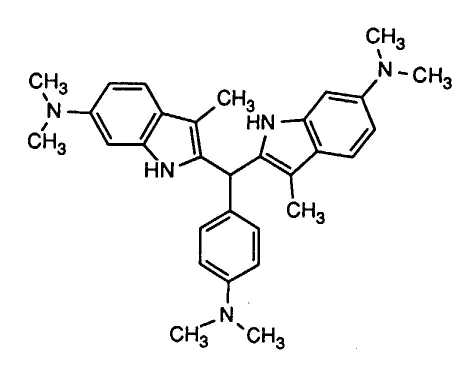
b) Auf analoge Art wie im Beispiel 4b) beschrieben werden 0,95 g des wie vorstehend beschrieben erhaltenen Bis(6-dimethylamino-3-methylindol-2-yl)-4-dimethylamino- phenylmethans mit 1,65 g Eisentrichlorid-Hexahydrat oxidiert, wobei 0,52 g tiefblaue Kristalle vom Schmelzpunkt >320° C isoliert werden. Sie entsprechen der Formel

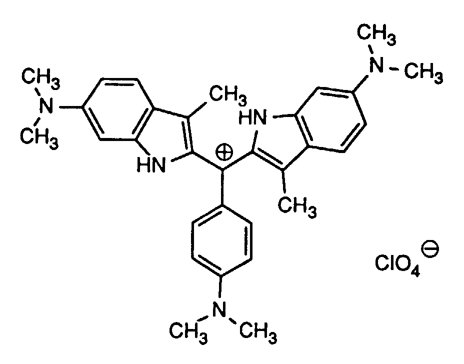

### Beispiel 6:

In einer Mischung von 40 ml Ethanol und 20 ml Eisessig werden 1,74 g 6-Dimethylamino-3-methylindol und 0,67 g 4-Hydroxybenzaldehyd während 4 Stunden bei 40° C gerührt. Anschliessend oxidiert man mit 2,75 g Eisentrichlorid-Hexahydrat während 1 Stunde bei Raumtemperatur. Innert 30 Minuten lässt man nun 250 ml einer gesättigten Natriumacetat-Lösung zufliessen, wobei das Produkt ausfällt und in einer Menge von 1,72 g filtriert werden kann. Nach Umkristallisation aus Methanol und Klärfiltration mit Aktivkohle schmelzen die blauen Kristalle oberhalb 320° C.
Durch Ansäuern mit HCl erhält man daraus den Farbstoff der Formel:

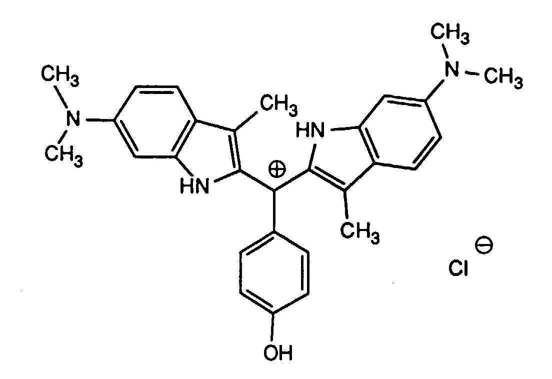

### Beispiele 7 bis 11:

Nach der im Beispiel 1 beschriebenen Arbeitsweise lassen sich auch die folgenden Farbstoffe herstellen:

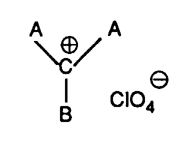

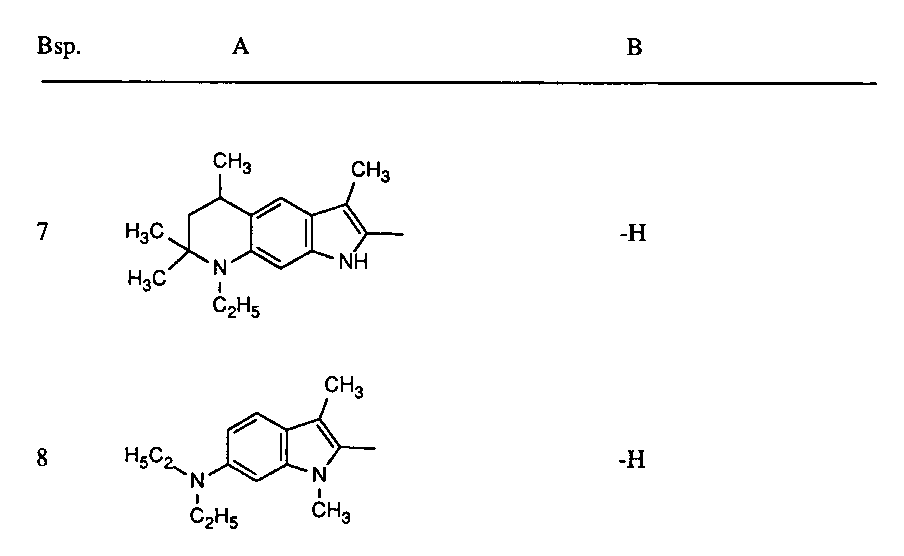

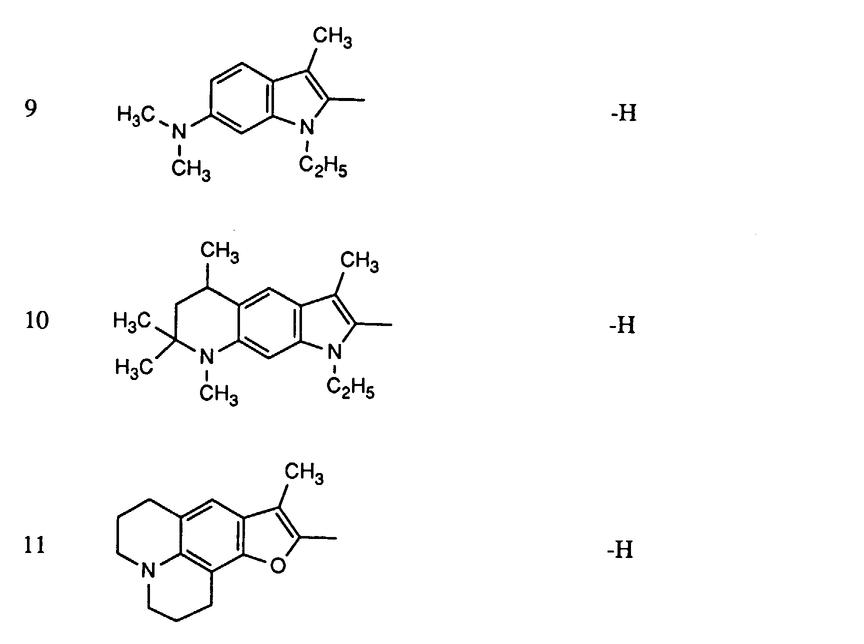

### Beispiele 12 bis 28:

Nach der im Beispiel 3 beschriebenen Arbeitsweise lassen sich auch die folgenden Farbstoffe herstellen :

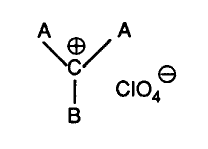

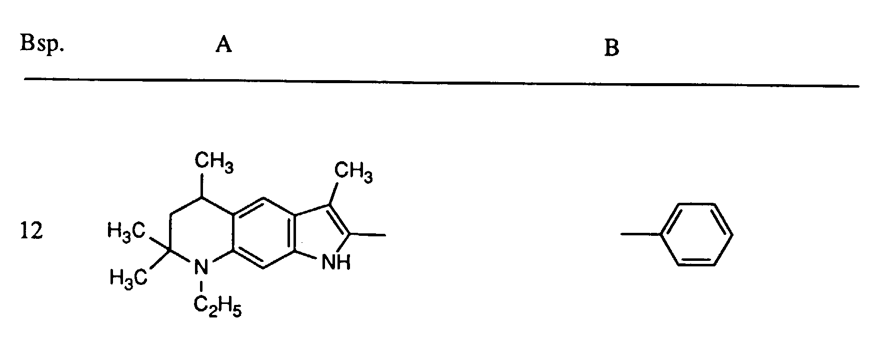

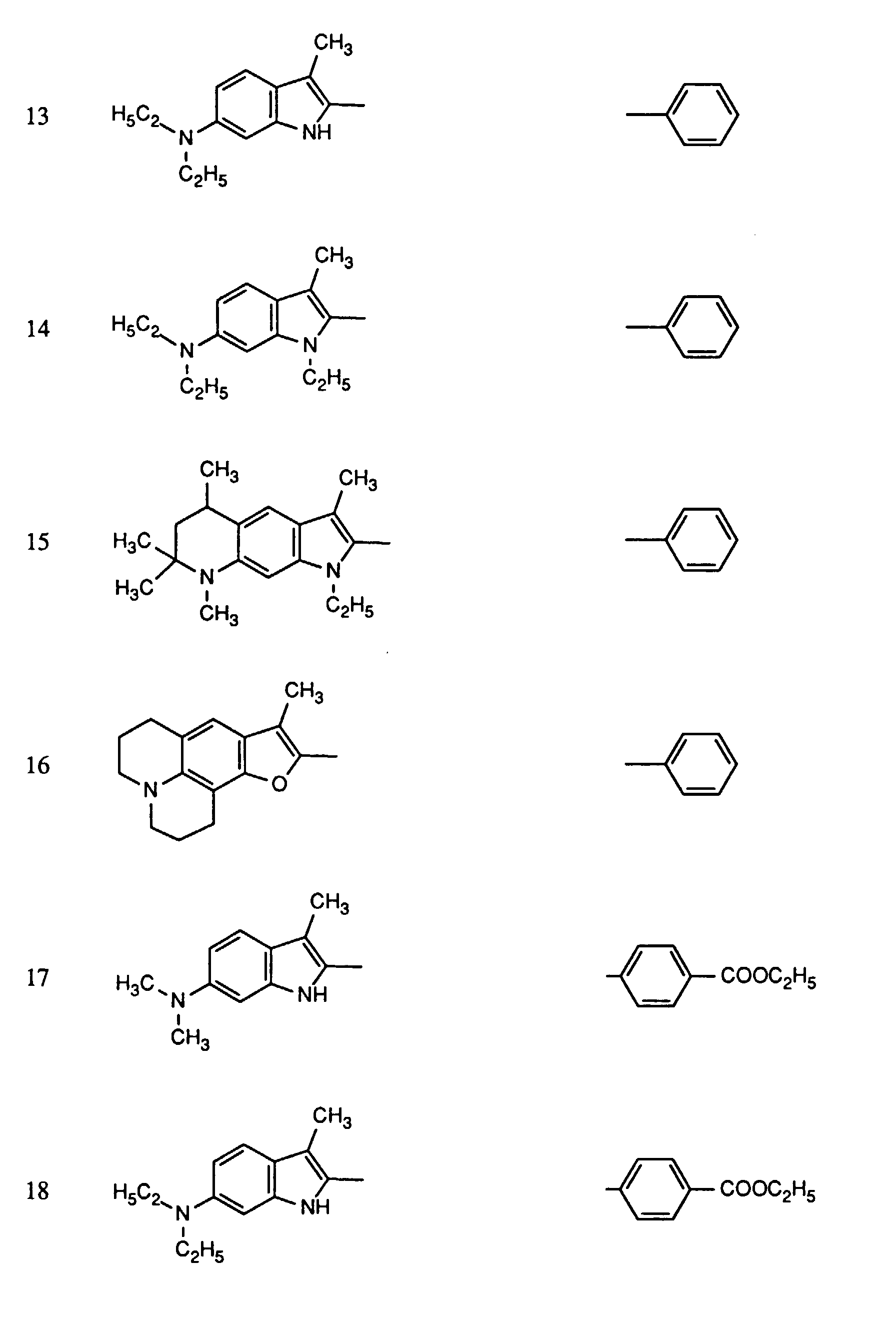

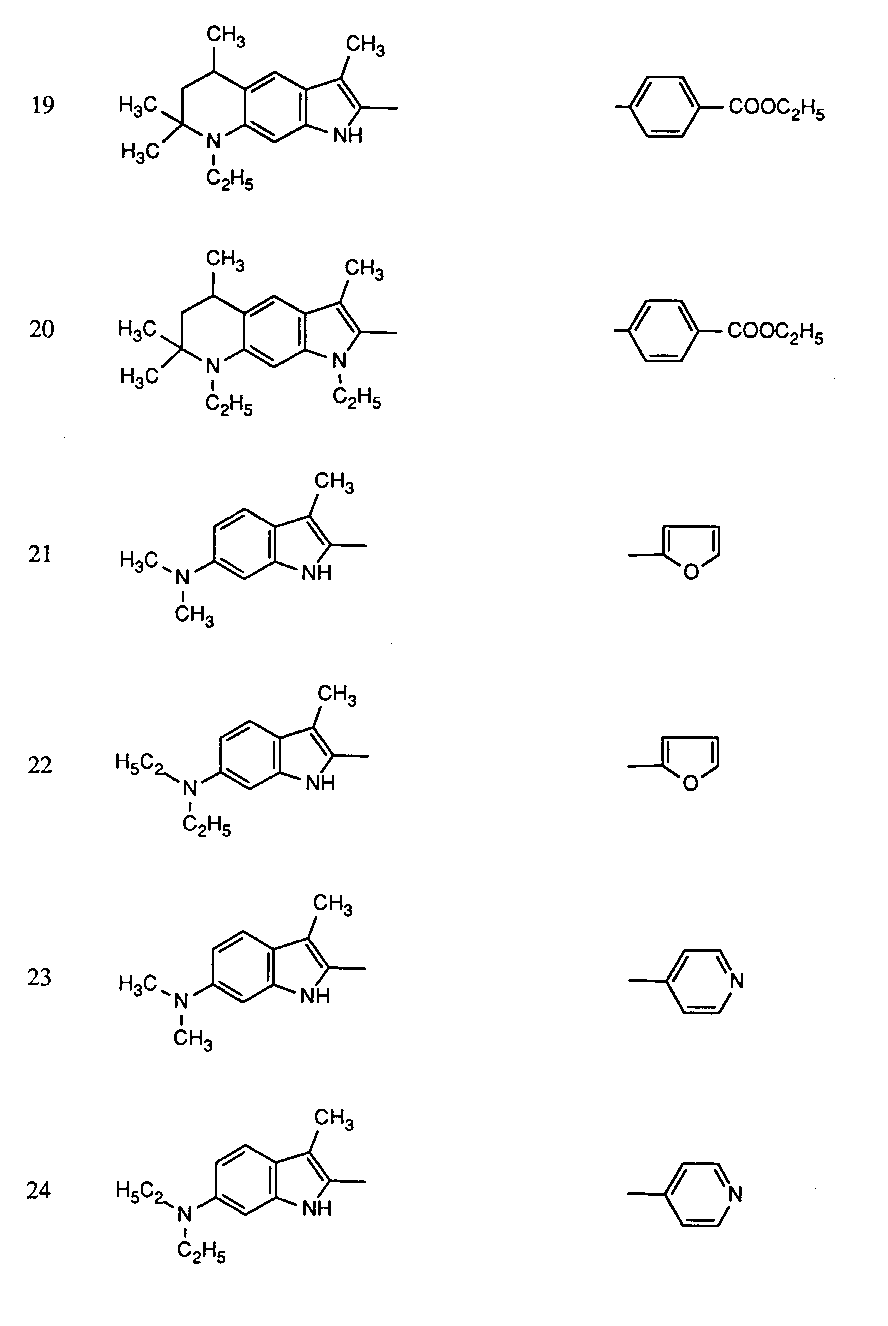

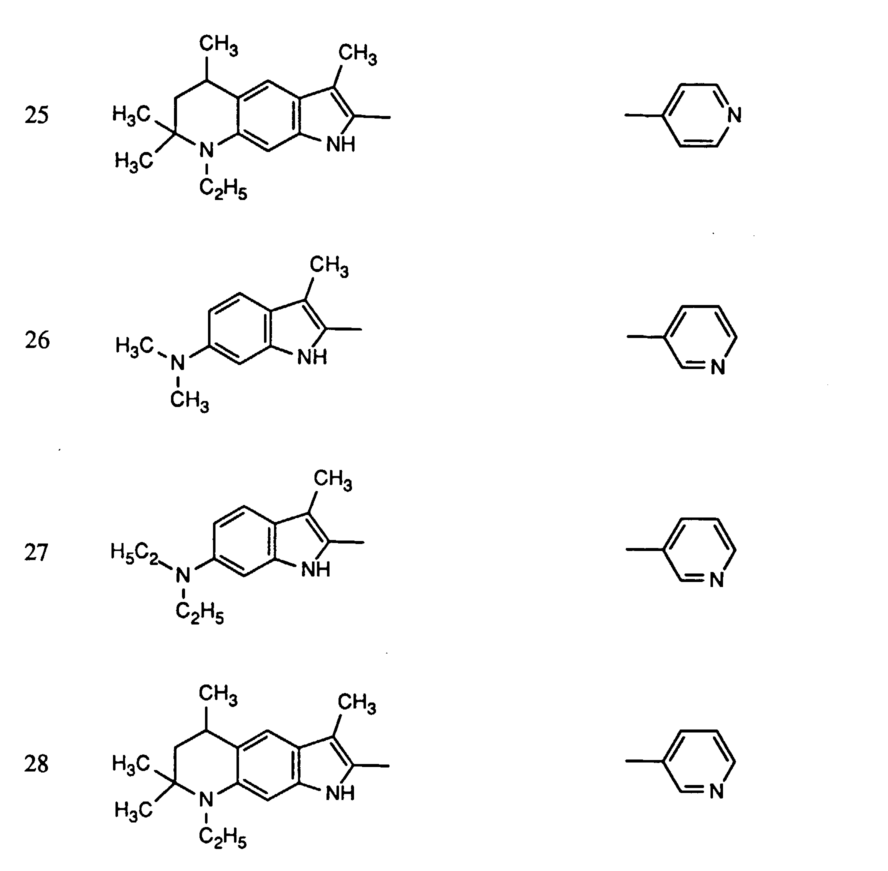

### B) Anwendungsbeispiele

### Beispiel 29: Herstellung eines optischen Aufzeichnungsmaterials.

2 Gew.-% der Verbindung gemäss Beispiel 2 werden in 2,2,3,3-Tetrafluor-1-propanol gelöst und danach über einen 0,2 µm Teflonfilter filtriert. Die Farbstofflösung wird mittels Schleuderbeschichtung unter Reinraumbedingungen bei 150 U/min auf eine 1,2 mm dicke Polycarbonatplatte (Dicke 1,2 mm) aufgetragen und der Überschuss bei 1500 U/min entfernt . Man erhält eine gleichmässige Farbstoffschicht, die nach dem Trocknen eine Dicke von 0,098 µm aufweist. In einer Vakuumverdampfungsapparatur wird auf der Farbstoffschicht eine 0,06 µm dicke Reflexionsschicht aus Gold aufgebracht und die Goldschicht nach dem Schleuderverfaren mit einem Photopolymer (RENGOLUX® RZ 3203-001) überschichtet, das mit UV-Strahlung gehärtet wird. Diese Schutzschicht ist 3,1 µm dick.

Das Aufzeichnungsmaterial hat bei einer Schreibwellenlänge von 780 nm eine Grundreflektivität von 17%. Mit einem Argon gepumpten Titan-Saphir Laser werden bei 780 nm mit einer Leistung von 6 mW (Strahldurchmesser etwa 1,0 µm, Pulsdauer 0,4 µs) Bits in die Aufzeichnungsschicht geschrieben. Die lokale Reflexionsänderung beträgt 100%; die Reflektivität hat damit nach dem Einschreiben auf 34% zugenommen. Beim Auslesen der Bits wird ein ausgezeichnetes Signal/Rausch-Verhältnis gefunden.

### Beispiel 30:

Es wird gemäss Beispiel 29 verfahren und ein Glasträger verwendet. Das Einschreiben der Bits wird bei einer Laserwellenlänge von 830 nm (Empfindlichkeit grösser als 2 nJ/Bit) vorgenommen. Die Bits werden mit einem kontinuierlichen Strahl gleicher Wellenlänge bei 0,1 mW ausgelesen.

### Beispiel 31:

Das gemäss Beispiel 29 hergestellte Aufzeichnungsmaterial wird zur Bestimmung der optischen Konstanten spektral-ellipsometrisch vermessen. Im Bereich der Aufzeichnungswellenlänge von 780 und 830 nm wird ein Brechungsindex von n=2,2 und ein Absorptionskoeffizient von k=0,9 im Wellenlängenbereich von 500 bis 900 nm gefunden.

## Patentansprüche

1. Verbindungen der Formel I 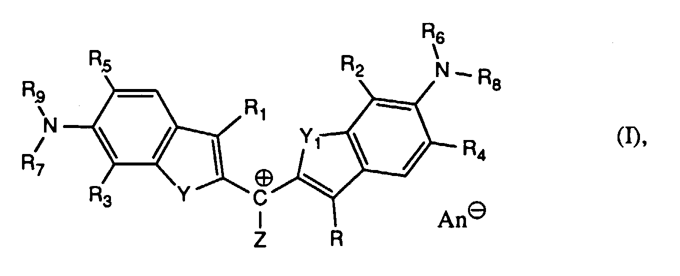 worin
Y und Y₁ unabhängig voneinander je O, S, NH oder N-Alkyl, N-Cycloalkyl, N-Phenyl oder N-Benzyl oder Y und Y₁ zusammen N-Alkylen-N,
R und R₁ unabhängig voneinander je H, Alkyl, Cycloalkyl, Aralkyl oder Aryl,
R₂ und R₃ unabhängig voneinander je H, oder R₂ zusammen mit R₆ und den sie verbindenden N- und C-Atomen einen 5- oder 6-gliedrigen Ring und R₃ H, oder R₃ zusammen mit R₇ und den sie verbindenden N- und C-Atomen einen 5- oder 6-gliedrigen Ring und R₂ H,
R₄ und R₅ unabhängig voneinander je H, oder R₄ zusammen mit R₈ und den sie verbindenden N- und C-Atomen einen 5- oder 6-gliedrigen Ring und R₅ H, oder R₅ zusammen mit R₉ und den sie verbindenden N- und C-Atomen einen 5- oder 6-gliedrigen Ring und R₄ H bedeuten,
R₆, R₇, R₈ und R₉ unabhängig voneinander je H, Alkyl, Cycloalkyl, Aralkyl oder Aryl darstellen, oder R₆ und R₈ und/oder R₇ und R₉ zusammen mit dem sie verbindenden N-Atom einen Piperidinrest, Morpholinrest oder einen unsubstituierten oder am N-Atom mit C₁-C₄-Alkyl, Hydroxy-C₁-C₄-Alkyl oder Amino-C₁-C₄-Alkyl substituierten Piperazinrest bilden,
Z H oder Aryl und
An^{⊖} ein Anion einer einbasischen Säure bedeuten, wobei
das Alkyl oder Cycloalkyl unsubstituiert oder mit Halogen, Hydroxy, C₁-C₄-Alkoxy, Cyan oder Phenyl substituiert ist, und
das Aryl oder Aralkyl unsubstituiert oder mit Halogen, Hydroxy, NH-Alkyl, N(Alkyl)₂, C₁-C₆-Alkyl, C₁-C₄-Alkoxy, Carboxy, Alkoxycarbonyl, Carbonamido, Mono- oder Dialkylcarbonamido, Nitro oder CN substituiert ist.

2. Verbindungen gemäss Anspruch 1, worin R und R₁ unabhängig voneinander je H oder einen C₁-C₄-Alkylrest darstellen.

3. Verbindungen gemäss Anspruch 2, worin das Alkyl Methyl ist.

4. Verbindungen gemäss Anspruch 1, worin R₂ und R₃ unabhängig voneinander je H bedeuten oder worin R₂ zusammen mit R₆ oder R₃ zusammen mit R₇ Trimethylen bedeuten.

5. Verbindungen gemäss einem der Ansprüche 1 bis 4, worin R₄ und R₅ unabhängig voneinander je H bedeuten oder worin R₄ zusammen mit R₈ oder R₅ zusammen mit R₉ 1,1-Dimethyl-3-methyl-trimethylen bedeuten.

6. Verbindungen gemäss einem der Ansprüche 1 bis 5, worin R₆, R₇, R₈ und R₉ unabhängig voneinander je H, C₁-C₄-Alkyl oder gegebenenfalls substituiertes Phenyl bedeuten.

7. Verbindungen gemäss einem der Ansprüche 1 bis 6, worin Y und Y₁ unabhängig voneinander je O, NH oder NH-C₁-C₄-Alkyl bedeuten.

8. Verbindungen gemäss einem der Ansprüche 1 bis 7, worin Z H oder einen gegebenenfalls substituierten Phenyl-, Naphthyl-, Pyridyl-, Furyl-, Thienyl- oder Pyrrolylrest bedeutet.

9. Verbindungen gemäss Anspruch 8, worin Z H, unsubstituiertes Pyridyl oder Furyl oder unsubstituiertes oder mit Nitro, Mono- oder Dialkylamino, Hydroxy, Carboxy oder Carboalkoxy substituiertes Phenyl bedeutet.

10. Verbindungen gemäss einem der Ansprüche 1 bis 9, worin sich das Anion An^{⊖} von einer anorganischen oder organischen Säure ableitet.

11. Verbindungen gemäss einem der Ansprüche 1 bis 10, worin es sich bei dem Anion An^{⊖} um F^{⊖}, Cl^{⊖}, Br^{⊖}, I^{⊖}, ClO₄^{⊖}, BrO₄^{⊖} , IO₄^{⊖}, NO₃^{⊖}, HSO₄^{⊖}, HCO₃^{⊖}, C₁-C₁₂-AlkylOSO₃^{⊖}, C₆H₅OSO₃^{⊖}, BF₄^{⊖}, PF₆^{⊖}, AsF₆^{⊖}, SbF₆^{⊖}, BiF₆^{⊖}, SbCl₆^{⊖} , (C₁-C₄-AlkylO)₂PO₂^{⊖}, (C₁-C₄-AlkylO)₂PO^{⊖}, (C₁-C₄-AlkylO)₂R₁₁PO^{⊖}, FSO₃^{⊖}, (C₁-C₄-AlkylO)R₁₁PO^{⊖}, R₁₁SO₃^{⊖}, R₁₁CO₂^{⊖}, wobei R₁₁ H, C₁-C₁₂-Alkyl, das teilweise oder ganz mit F oder Cl substituiert sein kann, C₄-C₈-Cycloalkyl, Phenyl, Naphthyl oder mit 1 bis 3 F, Cl, C₁-C₆-Alkyl oder C₁-C₆-Alkoxy substituiertes Phenyl oder Naphthyl darstellt.

12. Verbindungen gemäss Anspruch 11, worin es sich bei dem Anion An^{⊖} um Cl^{⊖}, Br^{⊖}, ClO₄^{⊖} , C₁-C₆-AlkylOSO₃^{⊖}, FSO₃^{⊖} und R₁₁SO₃^{⊖}, worin R₁₁ für C₁-C₄-Alkyl, CF₃, Phenyl oder mit 1 bis 3 F, Cl oder C₁-C₄-Alkyl substituiertes Phenyl steht.

13. Verfahren zur Herstellung von Verbindungen der Formel (I) gemäss Anspruch 1, worin Z H bedeutet, dadurch gekennzeichnet, dass man eine Verbindung der Formel II 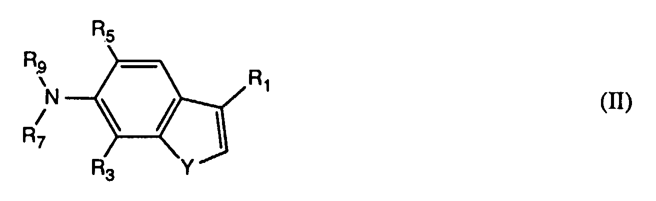 mit einem Orthoameisensäureester in Gegenwart einer starken Säure umsetzt, wobei Y, R₁, R₃, R₅, R₇ und R₉ die unter der Formel (I) angegebenen Bedeutungen aufweisen.

14. Verfahren zur Herstellung von Farbstoffen der Formel (I) gemäss Anspruch 1, dadurch gekennzeichnet, dass man eine Verbindung der Formel III 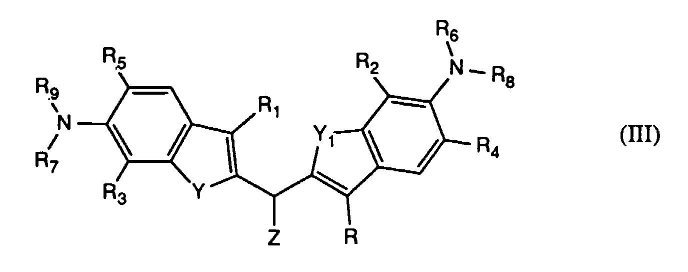 mit einem Oxidationsmittel oxidiert, wobei Y, Y₁, Z, R und R₁ bis R₉ die unter der Formel (I) angegebenen Bedeutungen aufweisen.

15. Verfahren gemäss Anspruch 14, dadurch gekennzeichnet, dass man als Oxidationsmittel Jod, Chloranil (Tetrachlorbenzochinon), H₂O₂ oder Eisentrichlorid verwendet.

16. Verbindungen der Formel (III) 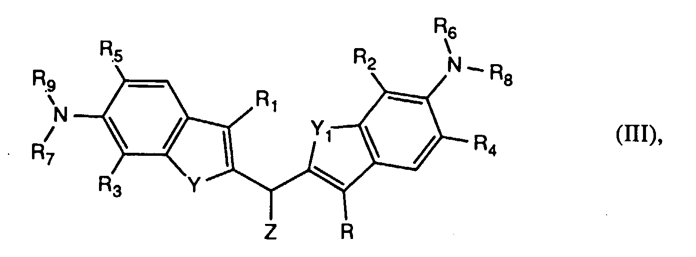 worin
Y und Y₁ unabhängig voneinander je O, S, NH oder N-Alkyl, N-Cycloalkyl, N-Phenyl oder N-Benzyl oder Y und Y₁ zusammen N-Alkylen-N,
R und R₁ unabhängig voneinander je H, Alkyl, Cycloalkyl, Aralkyl oder Aryl,
R₂ und R₃ unabhängig voneinander je H, oder R₂ zusammen mit R₆ und den sie verbindenden N- und C-Atomen einen 5- oder 6-gliedrigen Ring und R₃ H, oder R₃ zusammen mit R₇ und den sie verbindenden N- und C-Atomen einen 5- oder 6-gliedrigen Ring und R₂ H,
R₄ und R₅ unabhängig voneinander je H, oder R₄ zusammen mit R₈ und den sie verbindenden N- und C-Atomen einen 5- oder 6-gliedrigen Ring und R₅ H, oder R₅ zusammen mit R₉ und den sie verbindenden N- und C-Atomen einen 5- oder 6-gliedrigen Ring und R₄ H,
R₆, R₇, R₈ und R₉ unabhängig voneinander je H, Alkyl, Cycloalkyl, Aralkyl oder Aryl, oder R₆ und R₈ und/oder R₇ und R₉ zusammen mit dem sie verbindenden N-Atom einen Piperidinrest, Morpholinrest oder einen unsubstituierten oder am N-Atom mit C₁-C₄-Alkyl, Hydroxy-C₁-C₄-Alkyl oder Amino-C₁-C₄-Alkyl substituierten Piperazinrest bilden, Z H oder Aryl bedeuten,
wobei das Alkyl oder Cycloalkyl unsubstituiert oder mit Halogen, Hydroxy, C₁-C₄-Alkoxy, Cyan oder Phenyl substituiert ist, und
das Aryl oder Aralkyl unsubstituiert oder mit Halogen, Hydroxy, NH-Alkyl, N(Alkyl)₂, C₁-C₆-Alkyl, C₁-C₄-Alkoxy, Carboxy, Alkoxycarbonyl, Carbonamido, Mono- oder Dialkylcarbonamido, Nitro oder CN substituiert ist.

17. Optisches Aufzeichnungsmaterial aus (a) einem festen Trägermaterial, auf dem (b) eine Aufzeichnungsschicht aus mindestens einer Verbindung der Formel I gemäss Anspruch 1 aufgebracht ist.

18. Optisches Aufzeichnungsmaterial gemäss Anspruch 17, worin sich zwischen Trägermaterial und Aufzeichnungsschicht oder auf der Aufzeichnungsschicht eine Reflexionsschicht befindet.

19. Optisches Aufzeichnungsmaterial gemäss Anspruch 17, worin die Dicke der Aufzeichnungsschicht 10 nm bis 10 µm beträgt.

20. Verfahren zum optischen Aufzeichnen und Speichern von Informationen in Form von Bits, dadurch gekennzeichnet, dass man die Aufzeichnungsschicht eines Aufzeichnungsmaterials gemäss Anspruch 17 mit Laserlicht einer Wellenlänge von 400 bis 1100 nm bestrahlt und die aufgezeichnete Information bei gleicher Wellenlänge durch Messung des Absorptionsunterschiedes zur unbestrahlten Umgebung ausliest.

21. Verwendung der Verbindungen der Formel (I) gemäss Anspruch 1 als optisches Aufzeichnungsmaterial.

## Claims

1. A compound of the formula I 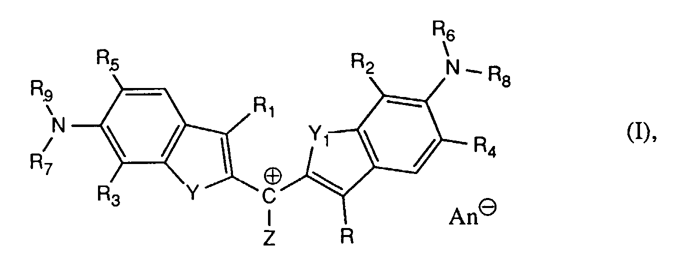 in which
Y and Y₁ are each, independently of one another, O, S, NH or N-alkyl, N-cycloalkyl, N-phenyl or N-benzyl, or Y and Y₁ are together N-alkylene-N,
R and R₁ are each, independently of one another, H, alkyl, cycloalkyl, aralkyl or aryl,
R₂ and R₃ are each, independently of one another, H, or R₂ forms, together with R₆ and the N and C atoms linking them, a 5- or 6-membered ring and R₃ is H, or R₃ forms, together with R₇ and the N and C atoms linking them, a 5- or 6-membered ring and R₂ is H,
R₄ and R₅ are each, independently of one another, H, or R₄ forms, together with R₈ and the N and C atoms linking them, a 5- or 6-membered ring and R₅ is H, or R₅ forms, together with R₉ and the N and C atoms linking them, a 5- or 6-membered ring and R₄ is H,
R₆, R₇, R₈ and R₉ are each, independently of one another, H, alkyl, cycloalkyl, aralkyl or aryl, or R₆ and R₈ and/or R₇ and R₉ form, together with the N atom linking them, a piperidine radical, a morpholine radical or an unsubstituted piperazine radical or a piperazine radical substituted on the N atom by C₁-C₄alkyl, hydroxyl-C₁-C₄alkyl or amino-C₁-C₄alkyl,
Z is H or aryl and
An^{⊖} is an anion of a monobasic acid,
the alkyl or cycloalkyl being unsubstituted or substituted by halogen, hydroxyl, C₁-C₄alkoxy, cyano or phenyl, and
the aryl or aralkyl being unsubstituted or substituted by halogen, hydroxyl, NH-alkyl, N(alkyl)₂, C₁-C₆alkyl, C₁-C₄alkoxy, carboxyl, alkoxycarbonyl, carbonamido, mono- or dialkylcarbonamido, nitro or CN.

2. A compound according to claim 1, in which R and R₁ are each, independently of one another, H or a C₁-C₄alkyl radical.

3. A compound according to claim 2, in which the alkyl is methyl.

4. A compound according to claim 1, in which R₂ and R₃ are each, independently of one another, H or in which R₂ together with R₆ or R₃ together with R₇ are trimethylene.

5. A compound according to any one of claims 1 to 4, in which R₄ and R₅ are each, independently of one another, H or in which R₄ together with R₈ or R₅ together with R₉ are 1,1-dimethyl-3-methyltrimethylene.

6. A compound according to any one of claims 1 to 5, in which R₆, R₇, R₈ and R₉ are each, independently of one another, H, C₁-C₄alkyl or a substituted or unsubstituted phenyl.

7. A compound according to any one of claims 1 to 6, in which Y and Y₁ are each, independently of one another, O, NH or NH-C₁-C₄alkyl.

8. A compound according to any one of claims 1 to 7, in which Z is H or a substituted or unsubstituted phenyl, naphthyl, pyridyl, furyl, thienyl or pyrrolyl radical.

9. A compound according to claim 8, in which Z is H, unsubstituted pyridyl or furyl, or unsubstituted phenyl or phenyl substituted by nitro, mono- or dialkylamino, hydroxyl, carboxyl or carboalkoxy.

10. A compound according to any one of claims 1 to 9, in which the anion An^{⊖} is derived from an inorganic or organic acid.

11. A A compound according to any one of claims 1 to 10, in which the anion An^{⊖} is F^{⊖}, Cl^{⊖}, Br^{⊖} , I^{⊖}, ClO₄^{⊖}, BrO₄^{⊖}, IO₄^{⊖}, NO₃^{⊖}, HSO₄^{⊖}, HCO₃^{⊖}, C₁-C₁₂alkylOSO₃^{⊖}, C₆H_{S}OSO₃^{⊖}, BF₄^{⊖}, PF₆^{⊖}, ASF₆^{⊖}, SbF₆^{⊖}, BiF₆^{⊖}, SbCl₆^{⊖}, (C₁-C₄alkylO)₂PO₂^{⊖}, (C₁-C₄alkylO)₂PO^{⊖}, (C₁-C₄alkylO)₂R₁₁PO^{⊖}, FSO₃^{⊖}, (C₁-C₄alkyl)R₁₁PO^{⊖}, R₁₁SO₃^{⊖}, R₁₁CO₂^{⊖}, R₁₁ being H, C₁-C₁₂alkyl, which may be partly or entirely substituted by F or Cl, C₄-C₈cycloalkyl, phenyl, naphthyl or phenyl or naphthyl substituted by 1 to 3 F, Cl, C₁-C₆alkyl or C₁-C₆alkoxy.

12. A compound according to claim 11, in which the anion An^{⊖} is Cl^{⊖}, Br^{⊖}, ClO₄^{⊖} , C₁-C₆alkylOSO₃^{⊖}, FSO₃^{⊖} and R₁₁SO₃^{⊖}, in which R₁₁ is C₁-C₄alkyl, CF₃, phenyl or phenyl substituted by 1 to 3 F, Cl or C₁-C₄alkyl.

13. A method of preparing compounds of the formula (I) according to claim 1, in which Z is H, which comprises reacting a compound of the formula II 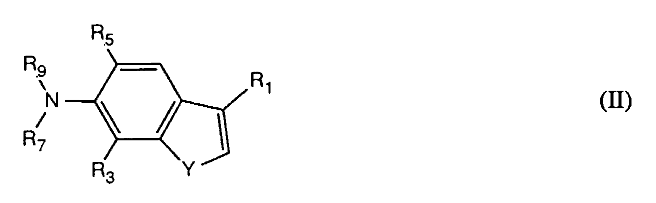 with an orthoformate in the presence of a strong acid, Y, R₁, R₃, R₅, R₇ and R₉ being as defined under the formula (I).

14. A method of preparing dyes of the formula (I) according to claim 1, wherein a compound of the formula III 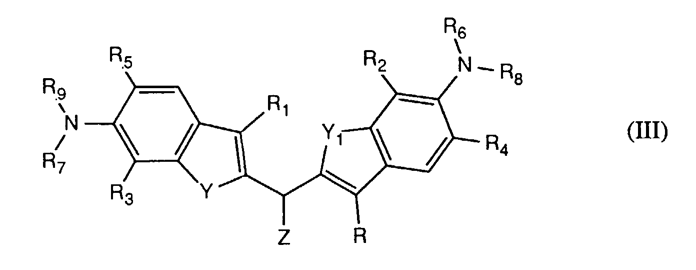 is oxidised using an oxidising agent, Y, Y₁, Z, R and R₁ to R₉ being as defined under the formula (I).

15. The method according to claim 14, wherein iodine, chloranil (tetrachlorobenzoquinone), H₂O₂ or iron trichloride is used as oxidising agent.

16. A compound of the formula (III) 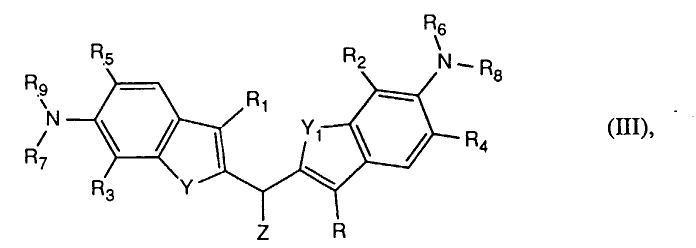 in which
Y and Y₁ are each, independently of one another, O, S, NH or N-alkyl, N-cycloalkyl, N-phenyl or N-benzyl, or Y and Y₁ are together N-alkylene-N,
R and R₁ are each, independently of one another, H, alkyl, cycloalkyl, aralkyl or aryl,
R₂ and R₃ are each, independently of one another, H, or R₂ forms, together with R₆ and the N and C atoms linking them, a 5- or 6-membered ring and R₃ is H, or R₃ forms, together with R₇ and the N and C atoms linking them, a 5- or 6-membered ring and R₂ is H,
R₄ and R₅ are each, independently of one another, H, or R₄ forms, together with R₈ and the N and C atoms linking them, a 5- or 6-membered ring and R₅ is H, or R₅ forms, together with R₉ and the N and C atoms linking them, a 5- or 6-membered ring and R₄ is H,
R₆, R₇, R₈ and R₉ are each, independently of one another, H, alkyl, cycloalkyl, aralkyl or aryl, or R₆ and R₈ and/or R₇ and R₉ form, together with the N atom linking them, a piperidine radical, a morpholine radical or an unsubstituted piperazine radical or a piperazine radical substituted on the N atom by C₁-C₄alkyl, hydroxyl-C₁-C₄alkyl or amino-C₁-C₄alkyl,
Z is H or aryl,
the alkyl or cycloalkyl being unsubstituted or substituted by halogen, hydroxyl, C₁-C₄alkoxy, cyano or phenyl, and
the aryl or aralkyl being unsubstituted or substituted by halogen, hydroxyl, NH-alkyl, N(alkyl)₂, C₁-C₆alkyl, C₁-C₄alkoxy, carboxyl, alkoxycarbonyl, carbonamido, mono- or dialkylcarbonamido, nitro or CN.

17. An optical recording material comprising (a) a solid base material on which (b) a recording layer composed of at least one compound of the formula I according to claim 1 is deposited.

18. The optical recording material according to claim 17, in which a reflective layer is located between base material and recording layer or on the recording layer.

19. The optical recording material according to claim 17, in which the thickness of the recording layer is 10 nm to 10 µm.

20. A method of optically recording and storing information in the form of bits, wherein the recording layer of a recording material according to claim 17 is irradiated with laser light having a wavelength of 400 to 1100 nm and the recorded information is read out at the same wavelength by measuring the difference in absorption with respect to the unirradiated surroundings.

21. The use of compounds of the formula (I) according to claim 1 as optical recording material.

## Revendications

1. Composés de formule I : 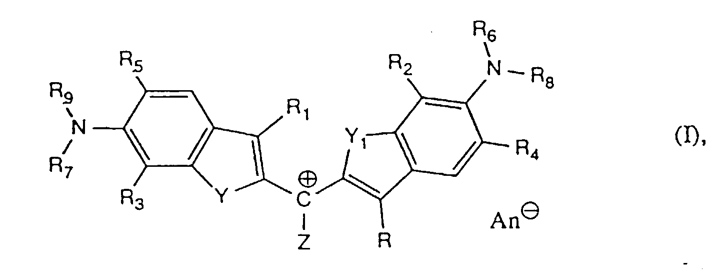 dans laquelle :
Y et Y₁, indépendamment l'un de l'autre, sont chacun O, S, NH ou un groupe N-alkyle, N-cycloalkyle, N-phényle ou N-benzyle, ou encore Y et Y₁ forment ensemble un radical N-alkylène-N,
R et R₁, indépendamment l'un de l'autre, sont chacun H ou un groupe alkyle, cycloalkyle, aralkyle ou aryle,
R₂ et R₃, indépendamment l'un de l'autre, sont chacun H, ou encore R₂, avec R₆ et les atomes d'azote ou de carbone qui les relient, forme un noyau à 5 ou 6 chaînons, et R₃ est H, ou encore R₃, avec R₇ et les atomes d'azote ou de carbone qui les relient, forme un noyau à 5 ou 6 chaînons, et R₂ est H,
R₄ et R₅, indépendamment l'un de l'autre, sont chacun H, ou encore R₄, avec R₈ et les atomes d'azote et de carbone qui les relient, forme un noyau à 5 ou 6 chaînons, et R₅ est H, ou encore R₅, avec R₉ et les atomes d'azote et de carbone qui les relient, forme un noyau à 5 ou 6 chaînons, et R₄ est H,
R₆, R₇, R₈ et R₉, indépendamment les uns des autres, sont chacun H ou un groupe alkyle, cycloalkyle, aralkyle ou aryle, ou encore R₆ et R₈ et/ou R₇ et R₉, avec l'atome d'azote qui les relient, forment un radical pipéridine, un radical morpholinyle ou encore un radical pipérazinyle, non substitué ou substitué sur l'atome d'azote par des substituants alkyle en C₁-C₄, hydroxy(alkyle en C₁-C₄) ou amino(alkyle en C₁-C₄),
Z est H ou un radical aryle, et
An- est un anion d'un monoacide, où :
le groupe alkyle ou cycloalkyle est non substitué, ou est substitué par des substituants halogéno, hydroxy, alcoxy en C₁-C₄, cyano ou phényle, et
le radical aryle ou aralkyle est non substitué, ou est substitué par des substituants halogéno, hydroxy, NH-alkyle, N(alkyle)₂, alkyle en C₁-C₆ alcoxy en C₁-C₄, carboxy, alcoxycarbonyle, carboxamido, mono- ou dialkylcarboxamido, nitro ou CN.

2. Composés selon la revendication 1, dans lesquels R et R₁, indépendamment l'un de l'autre, sont chacun H ou un groupe alkyle en C₁-C₄.

3. Composés selon la revendication 2, dans lesquels le groupe alkyle est le groupe méthyle.

4. Composés selon la revendication 1, dans lesquels R₂ et R₃, indépendamment l'un de l'autre, sont chacun H, ou encore dans lesquels R₂, avec R₆, ou R₃ avec R₇, représentent le groupe triméthylène.

5. Composés selon l'une des revendications 1 à 4, dans lesquels R₄ et R₅, indépendamment l'un de l'autre, sont chacun H, ou dans lesquels R₄ avec R₈, ou R₅ avec R₉, représentent le groupe 1,1-diméthyl-3-méthyltriméthylène.

6. Composés selon l'une des revendications 1 à 5, dans lesquels R₆, R₇, R₈ et R₉, indépendamment les uns des autres, sont chacun H ou un groupe alkyle en C₁-C₄ ou phényle éventuellement substitué.

7. Composés selon l'une des revendications 1 à 6, dans lesquels Y et Y₁, indépendamment l'un de l'autre, sont chacun O, NH ou un groupe NH-(alkyle en C₁-C₄).

8. Composés selon l'une des revendications 1 à 7, dans lesquels Z est H ou représente un groupe phényle, naphtyle, pyridyle, furyle, thiényle ou pyrrolyle éventuellement substitué.

9. Composés selon la revendication 8, dans lesquels Z est H ou un groupe pyridyle ou furyle non substitué, ou encore un groupe phényle non substitué, ou substitué par des substituants nitro, mono- ou dialkylamino, hydroxy, carboxy ou carbalcoxy.

10. Composés selon l'une des revendications 1 à 9, dans lesquels l'anion An- dérive d'un acide minéral ou organique.

11. Composés selon l'une des revendications 1 à 10, dans lesquels, pour ce qui est de l'anion An⁻, il s'agit des anions suivants : F⁻, Cl⁻, Br⁻, I⁻, ClO₄⁻, BrO₄⁻, IO₄⁻, NO₃⁻, HSO₄⁻, HCO₃⁻, (alkyle en C₁-C₁₂)OSO₃⁻, C₆H₅OSO₃⁻, BF₄⁻, PF₆⁻, AsF₆⁻, SbF₆⁻, BiF₆⁻, SbCl₆⁻, ((alkyle en C₁-C₄)O)₂PO₂-, ((alkyle en C₁-C₄)O)₂PO-, ((alkyle en C₁-C₄)O)₂R₁₁PO⁻, FSO₃⁻, ((alkyle en C₁-C₄)O)R₁₁PO⁻, R₁₁SO₃⁻, R₁₁CO₂⁻, où R₁₁ est H ou un groupe alkyle en C₁-C₁₂ pouvant être en totalité ou en partie substitué par F ou Cl, cycloalkyle en C₄-C₈, phényle, naphtyle, ou encore phényle ou naphtyle substitué par 1 à 3 substituants F, Cl, alkyle en C₁-C₆ ou alcoxy en C₁-C₆.

12. Composés selon la revendication 11, dans lesquels, pour ce qui est de l'anion An-, il s'agit des anions suivants : Cl-, Br-, ClO₄⁻, (alkyle en C₁-C₆)OSO₃⁻, FSO₃⁻ et R₁₁SO₃⁻, où R₁₁ est un radical alkyle en C₁-C₄, CF₃, phényle, ou encore phényle substitué par 1 à 3 substituants F, Cl ou alkyle en C₁-C₄.

13. Procédé pour préparer des composés de formule I selon la revendication 1, dans laquelle Z est H, caractérisé en ce qu'on fait réagir un composé de formule II : 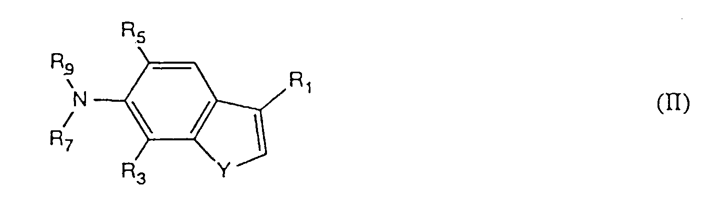 avec un orthoformiate, en présence d'un acide fort, auquel cas Y, R₁, R₃, R₅, R₇ et R₉ ont les significations données à propos de la formule I.

14. Procédé pour préparer des colorants de formule I selon la revendication 1, caractérisé en ce qu'on oxyde avec un oxydant un composé de formule III : 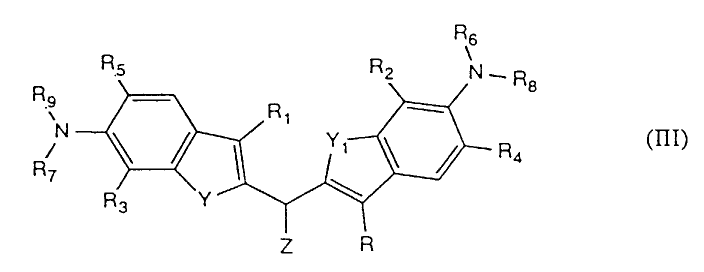 auquel cas Y, Y₁, Z, R, et R₁ à R₉ ont les significations données à propos de la formule I.

15. Procédé selon la revendication 14, caractérisé en ce qu'on utilise comme oxydant de l'iode, du chloranile (tétrachlorobenzoquinone), du H₂O₂ ou du trichlorure de fer.

16. Composés de formule III : 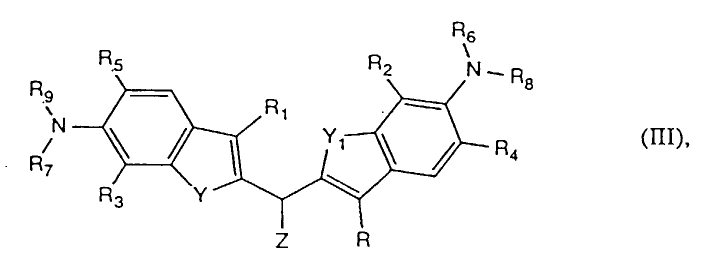 dans laquelle :
Y et Y₁, indépendamment l'un de l'autre, sont chacun O, S, NH ou un groupe N-alkyle, N-cycloalkyle, N-phényle ou N-benzyle, ou encore Y et Y₁ forment ensemble un radical N-alkylène-N,
R et R₁, indépendamment l'un de l'autre, sont chacun H ou un groupe alkyle, cycloalkyle, aralkyle ou aryle,
R₂ et R₃, indépendamment l'un de l'autre, sont chacun H, ou encore R₂, avec R₆ et les atomes d'azote ou de carbone qui les relient, forme un noyau à 5 ou 6 chaînons, et R₃ est H, ou encore R₃, avec R₇ et les atomes d'azote ou de carbone qui les relient, forme un noyau à 5 ou 6 chaînons, et R2 est H,
R₄ et R₅, indépendamment l'un de l'autre, sont chacun H, ou encore R₄, avec R₈ et les atomes d'azote et de carbone qui les relient, forme un noyau à 5 ou 6 chaînons, et R₅ est H, ou encore R₅, avec R₉ et les atomes d'azote et de carbone qui les relient, forme un noyau à 5 ou 6 chaînons, et R4 est H,
R₆, R₇, R₈ et R₉, indépendamment les uns des autres, sont chacun H ou un groupe alkyle, cycloalkyle, aralkyle ou aryle, ou encore R₆ et R₈ et/ou R₇ et R₉, avec l'atome d'azote qui les relient, forment un radical pipéridine, un radical morpholinyle ou encore un radical pipérazinyle, non substitué ou substitué sur l'atome d'azote par des substituants alkyle en C₁-C₄, hydroxy(alkyle en C₁-C₄) ou amino(alkyle en C₁-C₄),
Z est H ou un radical aryle, et où :
le groupe alkyle ou cycloalkyle est non substitué, ou est substitué par des substituants halogéno, hydroxy, alcoxy en C₁-C₄, cyano ou phényle, et
le radical aryle ou aralkyle est non substitué, ou est substitué par des substituants halogéno, hydroxy, NH-alkyle, N(alkyle)₂, alkyle en C₁-C₆, alcoxy en C₁-C₄, carboxy, alcoxycarbonyle, carboxamido, mono- ou dialkylcarboxamido, nitro ou CN.

17. Matériau d'enregistrement optique, constitué (a) d'un matériau support solide, sur lequel (b) est appliquée une couche d'enregistrement, constituée d'au moins un composé de formule I selon la revendication 1.

18. Matériau d'enregistrement optique selon la revendication 17, dans lequel une couche réfléchissante se trouve entre le matériau support et la couche d'enregistrement, ou sur la couche d'enregistrement.

19. Matériau d'enregistrement optique selon la revendication 17, dans lequel l'épaisseur de la couche d'enregistrement est de 10 nm à 10 µm.

20. Procédé d'enregistrement optique et de mémorisation d'informations sous forme de bits, caractérisé en ce qu'on expose à une lumière laser ayant une longueur d'onde de 400 à 1100 nm une couche d'enregistrement d'un matériau d'enregistrement selon la revendication 17, les informations enregistrées étant, à cette même longueur d'onde, lues par mesure de la différence d'absorption avec les zones voisines non exposées.

21. Utilisation des composés de formule I selon la revendication I en tant que matériau d'enregistrement optique.
